# EUROPEAN PATENT SPECIFICATION

(11) **EP 3 431 167 B1**
(45) Date of publication and mention of the grant of the patent: **06.04.2022**
(21) Application number: 18181485.6
(22) Date of filing: 03.07.2018
(51) Int. Cl.: B01D 53/56

(54) **METHOD AND INSTALLATION OF SELECTIVE, NON-CATALYTIC REDUCTION OF NITROGEN OXIDES IN GRATE BOILERS**
VERFAHREN UND EINRICHTUNG ZUR SELEKTIVEN, NICHT-KATALYTISCHEN REDUKTION VON STICKOXIDEN IN ROSTKESSELN
PROCÉDÉ ET INSTALLATION DE RÉDUCTION SÉLECTIVE ET NON CATALYTIQUE D'OXYDES D'AZOTE DANS DES CHAUDIÈRES À GRILLE

(30) Priority: 18.07.2017 PL 42225317
(43) Date of publication of application: 23.01.2019
(73) Proprietor: ECOENERGIA Spolka z Ograniczona Odpowiedzialnoscia, 01-342 Warszawa (PL)
(72) Inventor: Badyda, Krzysztof, 03-721 Warszawa (PL); Krawczyk, Piotr, 05-620 Bledow (PL); Lewandowski, Janusz, 05-500 Nowa Iwiczna (PL); Baran, Lukasz, 00-712 Warszawa (PL); Siwinski, Jan, 05-806 Nowa Wies (PL); Malek, Marcin, 01-307 Warszawa (PL); Mentrak, Krzysztof, 05-820 Piastow (PL); Grabowski, Krzysztof, 05-820 Piastow (PL); Pokorski, Wojciech, 05-820 Piastow (PL)
(74) Representative: AOMB Polska Sp. z.o.o.

(56) References cited:
- EP-A1- 0 712 377
- US-A- 6 048 510
- US-A1- 2005 000 220
- US-A1- 2015 064 083
- US-B1- 6 453 830

## Description

The subject of the invention is method and installation of selective, non-catalytic reduction of nitrogen oxides in grate boilers, ensuring reduction of nitrogen oxide emissions to the atmosphere, especially from coal-fired steam or water boilers to values below 200 mg/m³

Two basic methods of NOx reduction in the fumes of power boilers, low-temperature catalytic (SCR) and high-temperature non-catalytic (SNCR) are known from the technical literature and descriptions of inventions. The catalytic method is generally used for large fuel combustion installations requiring high denitrification efficiency.

The SNCR (Selective Non-Catalytic Reduction) method, due to the simplicity of the solution and the relatively low capital expenditure, is particularly dedicated to small boilers, especially those commonly used in heating systems equipped with water grate boilers.

The effectiveness of SNCR technology with the use of a urea solution as a reactant depends on many process parameters, i.a. the method of boiler operation, the injection sites of the reactant and related with them reaction temperatures, atomization of the reactant, chemical composition of exhaust gas as well as the degree of mixing of the reactant and exhaust gases.

From the Polish description of the patent application P.407573 a method and installation for selective, non-catalytic reduction of nitrogen oxides NOx in power, in particular steam grate boilers, is known.

The method is characterized in that the choice of direction and the amount of injection of the aqueous reactant is determined on the basis of the parameters of the grate boiler, defining the temperature distribution in the cross-section and longitudinal section of the boiler, as well as by the correction of the influence of the temperature profile changing over time in the grate boiler using such parameters like temperature, NOx concentration, amount of steam generated, grate speed, position of the layer, primary and secondary air, fuel calorific value.

The installation is characterized by that the injection lances of the aqueous reactant solution are equipped with pressure nozzles located in rows and positioned mutually at an angle of 90 °. The inflow of aqueous reactant to pressure nozzles is regulated by solenoid valves connected by digital-to-analogue converters with microcontroller output, the inputs of which are connected by analog-to-digital converters with temperature sensors, NOX concentration sensor, steam generation sensor, grate speed sensor, layer position sensor, primary and secondary air sensors, a pressure sensor in the aqueous reactant tank, a sensor for the critical level of the aqueous reactant solution in the tank.

From the description of the patent application US 5676071 a method and installation for selective, non-catalytic reduction of nitrogen oxides is known, based on that the amount of reactant introduced into the flue gas stream inside the boiler is determined by measuring the actual values of the flue gas composition and comparing them to a predetermined value and the reduction is carried out using multiple reactant injection nozzles into the flue gas flow through the flow chamber.

The method of reduction of nitrogen oxides is characterized by the fact that the sensors detect elevated concentration of nitrogen oxides, flame detectors send information about the locations of the flame and only those of the injection nozzles that inject the reactant outside the flame zone are inserted into the boiler combustion chamber.

However, the installation is characterized in that the injection lances are placed in the side walls of the boiler, on each side wall there are three rows of lances with three lances in each row, the lances being located on a given wall, essentially on a square plan.

The injection lances, at the ends of which the injection nozzles are located, are not present at all times in the combustion chamber, whereupon at their rear end they are connected to electronically controlled actuators or motors and are withdrawn from the combustion chamber at a time when reactant injection is not required.

From the description of the patent application US 20110150709 A1 a device for reducing nitrogen oxides in exhaust gases is known, where based on the measurement of temperature distribution inside the boiler by the control unit and appropriately selected injection lances reactant is injected into the interior of a fossil fuel boiler, especially power plants, with hot flue gas.

The above device is characterized in that lances with injection nozzles are fixed permanently in the side walls of the boiler, in three planes, 4 lances in each plane, the lances being placed in pairs opposite each other. The installation uses flame detectors to realize the reactant injection only through selected lances with injection nozzles.

US 6 048 510 discloses a method and system for reducing nitrogen oxides in combustion effluents.

The disadvantages of the above-mentioned solutions for the reduction of nitrogen oxides in exhaust gases is that in the invention according to P.407573 the injection nozzles are arranged such that at least a part of the injected reactant goes against the wall of the boiler or is injected along the wall, resulting in lower efficiency of the reduction of nitrogen oxides.

Additionally, the solutions according to US 5676071 and US 20110150709 A1 provide the installation of lances with injection nozzles in the side walls of the boiler on a square / rectangular plan, which is disadvantageous because some of the nozzles remain in the flame zone all the time and remains inactive because their operation would be ineffective.

In addition, all of the above mentioned known solutions provide the presence of lances with injection nozzles within the combustion chamber, i.e. lances with nozzles extend from the boiler walls, which is unnecessary interference in the flow zone through the combustion chamber and can lead to excessive wear of the injection lances or nozzles.

Furthermore, the use of mobile injection lances according to US 5676071 involves additional electronic means for sliding the lances in / out, which can easily break down, thereby preventing efficient operation of the plant for reducing nitrogen oxides.

The aim of the invention is the method and installation for selective, non-catalytic reduction of nitrogen oxides in the grate boilers, which ensure effective and optimal purification of flue gases from nitrogen oxides and enable modification of existing grate boilers with the least possible interference in the elements of the boiler's water circuit and the interior of the combustion chamber.

The method of selective, non-catalytic reduction of nitrogen oxides in grate boilers, is conducted in the installation according to the invention and is characterized in that the injection of aqueous reactant solution of urea or ammonia with concentration of 5% to 40% into the furnace chamber of the grate boiler using air in the proportion of 0,1 kg / kg to 2 kg / kg relative to the reactant solution is made from its side walls from lances with nozzles above the detected flame area, while the injection of the reactant solution near the front wall and the rear wall of the grate boiler combustion chamber is made from unsymmetrical two-hole nozzles with one hole centrally faced along the rear wall / front wall of grate boiler and with a second hole directed towards the center of the combustion chamber with an acute angle (α) between the injection directions from both of these holes preferably between 20° and 70° or one-hole nozzles with a centrally located hole, while injection of the reactant solution from injection nozzles not in the vicinity of the front wall or the back wall of the grate boiler is from unsymmetrical two-hole nozzles, symmetrical three-hole nozzles with one hole centrally oriented perpendicular to the side wall of grate boiler and two side holes directed towards the center of the combustion chamber with an acute angle between the injection directions from both of these holes, preferably between 20° and 70° to the side wall of the grate boiler or is made by single-hole nozzles with a hole centrally located.

Installation of selective, non-catalytic reduction of nitrogen oxides in grate boilers, characterized in that built-in in both side walls of the chamber of the grate boiler lances with injection nozzles are located on each of these walls in the area of a right-angled triangle, one of which legs is vertical and near the back of the chamber wall and the other is horizontal and connects to the upper end of the first leg and runs towards the front wall of the chamber and are placed in the holes in the fins between the screen tubes, so that the major part of the lance with injection nozzles extends from the wall of the grate boiler from its outside and only unsymmetrical two-hole injection nozzles, three-hole symmetric, single-hole injection with centrally located hole are introduced into the furnace chamber of this boiler, wherein lances with injection nozzles are placed on the walls of the furnace chamber of the grate boiler in horizontal rows, which number, depending on boiler dimensions and power, as well as injection parameters, ranges from 1 to 10 rows, and each of these rows has less than 15 lances with injection nozzles, while the number of lances with injection nozzles in the lowest row is from 1 to 3 and in each row from the lowest to the highest row, the number of lances with injection nozzles increases by 1-2 lances, wherein lances with injection nozzles in the lowest row have asymmetrical two-hole injection nozzles or single-hole nozzles with center hole and lances with injection nozzles in the highest row there have two-hole unsymmetrical injection nozzles and / or symmetrical three-hole nozzles, while lances with injection nozzles between the highest and the lowest row have two-hole unsymmetrical injection nozzles and / or three-hole symmetric injection nozzles and / or single-hole nozzles with a centrally located hole.

The advantage of the method and installation of the selective, non-catalytic reduction of nitrogen oxides in the grate boilers according to the invention is the reduction of nitrogen oxide emissions to the atmosphere from coal-fired grate boilers to values below 200 mg / m3 and small changes in the construction of modernized boilers.

The advantage of the method of the selective, non-catalytic reduction of nitrogen oxides in the grate boilers is limited amount of information in the control system on the status of technological parameters of the boiler operation, where one of the signals may be information from the optical flame detector installed at each lance with injection nozzles.

The advantage of the installation of selective, non-catalytic reduction of nitrogen oxides in the grate boilers is minimal interference in the boiler's construction during its assembly and the fact that no deflection of the screen pipes in the boiler screens is performed. In addition, lances are not introduced into the boiler furnace chamber space and the use of an accompanying air system is not required.

The invention in the exemplary is shown in the drawing, where:
Fig. 1 schematically shows a grate boiler in a view from both sides, right and left with a zone of arrangement of the lances with injection nozzles, marked in the form of a triangle,
Fig. 2 shows a schematic outline of the right side of the grate boiler from Fig. 1 without numerical symbols, with a visible zone of flame presence in the combustion chamber,
Fig. 3 schematically shows the top view of a firing chamber of a grate boiler with six injection nozzles, which differ in type and arrangement depending on their location in the furnace and injection angles of the reactant,
Fig. 4 schematically shows a vertical section-view of a grate boiler along the front wall,
Fig. 5 schematically shows a cross-section of the grate boiler along the combustion chamber in a top view over the lances with injection nozzles,
Fig. 6 schematically shows a vertical section-view of a grate boiler along one of its side walls, together with schematic connections of an installation for selective non-catalytic reduction of nitrogen oxides in a 40 MW grate boiler.

In the method of selective, non-catalytic reduction of nitrogen oxides in grate boilers according to the invention, reduction of NOx is accomplished by injecting a reactant, i.e. an aqueous solution of urea or aqueous ammonia into the combustion chamber of the grate boiler 1, from its side walls 7 through lances with injection nozzles 13. The reactant injection process is regulated based on measurements of three parameters: grate boiler 1 power output, flue gas temperature measurement after festoon (i.e. flue gas temperature at the input to the second draft, at the exit from the combustion chamber) and measurement of NOx concentration in the flue gas.

If the concentration of nitrogen oxides is higher than allowed, the electronic control system 17 determines the injection parameters of the reactant solution. The amount and concentration of the reactant is selected based on the power of the grate boiler 1 and based on the measurement of the exhaust gas temperature. In addition, measurement from optical flame detectors 16, placed at the lances with injection nozzles 13, may be used. The electronic control system 17 only activates those lances with injection nozzles 13, at which no flame is detected.

Measurements of power, temperature, NOx concentration and flame detection are carried out continuously during the operation of the grate boiler 1, and the electronic control system 17 continuously performs changes in the amount and concentration of the reactant administered, as well as start or stop of injection from specific injection nozzles: two-hole unsymmetrical 6a, three-hole 6b, single-hole with a hole placed centrally 6c.

The reactant injection is accomplished by introducing into the injection lance 13 an aqueous solution of urea or aqueous solution of ammonia and compressed air, whereby the reactant is lifted with compressed air and sprayed through two-hole unsymmetrical 6a, three-hole symmetrical 6b, one-hole injection nozzles with a centrally located hole 6c to the inside of the furnace chamber of the grate boiler 1.

The concentration of reactant is important for the method of reducing nitrogen oxides, because the amount of urea or ammonia feed has a direct effect on effectiveness and cost the process of denitrification of exhaust gases.

A decrease in the concentration of the reactant in the injected solution generally improves the efficiency of flue gas denitrification, but increases the consumption of water for its dilution and the air for its spraying.

On the other hand, too high concentration of the reactant does not guarantee an effective reduction of NOx from the flue gas, which is associated with pollution of the environment and an increase in costs due to fees for the emission of flue gas from a grate boiler with an unacceptable flue gas composition.

As a result of the tests, it was found that the optimal results are obtained when the furnace chamber of the grate boiler 1 is injected with a reactant solution at a concentration of 5% to 40%, preferably when the concentration is from 10% to 30%, with the best effects and the best ratio effectiveness in operating costs was achieved when the injected urea solution was in a concentration of 12 to 20%.

The parameters of compressed air supplied to the lances with injection nozzles 13 for spraying the reactant in the boiler's furnace chamber are also important. As a result of the research, it was found that the air mass expense relative to the mass reactant, e.g. aqueous urea solution, is particularly important.

Optimal spraying of the reactant, and therefore an effective NOx reduction was obtained when the air is in the proportion of 0,1 kg/kg to 2 kg/kg of air relative to the aqueous urea solution. Preferred results were obtained in the range of 0,15 kg/kg to 1 kg/kg air relative to the reactant, and the best results were obtained in the range from 0,2 kg/kg to 0,6 kg/kg of air relative to the reactant.

For the pressure of the atomizing air directed to the lances with the injection nozzles 13, the test results confirmed that it is purposeless to use pressures higher than 3 bar.

The temporary concentrations of the reactant as well as the temporary proportions of air relative to the aqueous urea solution may change over time. The electronic control system 17 performs continuous calibration, closing and opening the electrovalves 12 for supplying the reactant solution, water and air to the lances with injection nozzles 13, in order to maintain an appropriate level of NOx in the exhaust gas required by the relevant regulations.

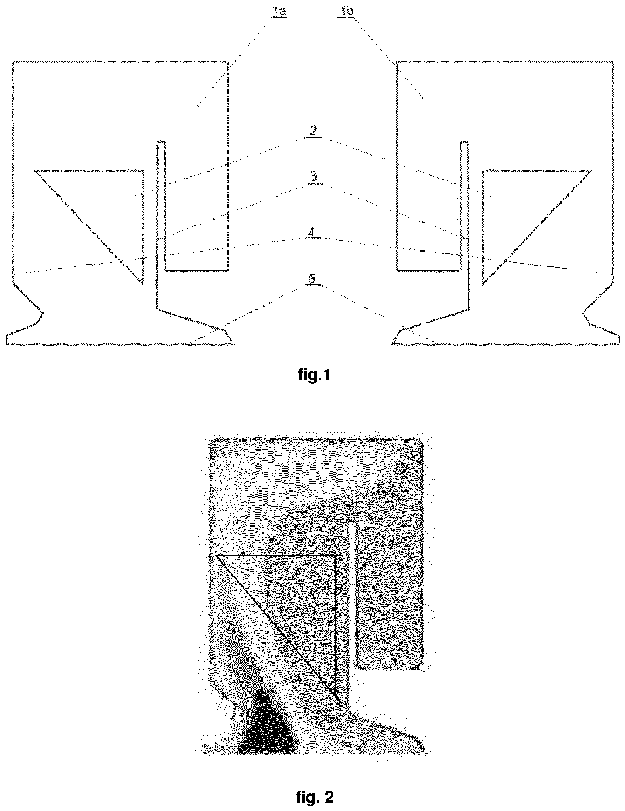

In the exemplary, schematic outline of the grate boiler illustrated in Fig. 1, a triangle is marked with a zone in which lances with injection nozzles 13 are mounted in the side walls 1a and 1b.

The lances are mounted and arranged in a region 2 defined by a rectangular triangle, with its vertical leg located near the back wall 3 of the furnace of the grate boiler 1, while its horizontal leg is directed towards the front wall 4 of the grate boiler 1. Such a distribution zone of lances with injection nozzles 13 results from the tests according to which the zone of the most frequent flame occurrence is determined, and thus the temperature distribution in the furnace chamber of the grate boiler 1.

It turned out that the flame occurs in the lower zone of the furnace of the grate boiler 1 near its movable grate 5, while the upward flame extends on the front wall 4 of the furnace chamber of the grate boiler 1. The shape of the flaming zone is shown in Fig. 2, which shows right side view of the boiler with the temperature distribution illustrated in shades of gray.

The darkest area near the grate 5 at the front wall of the furnace chamber of the grate boiler 1 determines the area of the highest temperatures. As we move away from the zone of the highest temperatures, the areas are marked on gradually lighter shades of gray up to almost white marking the zone of temperatures that are already so low that there are suitable conditions for injection of aqueous urea solution to reduce NOx.

The further marked area, again darker shades of gray, determines the area of lower temperatures, and thus the area to which the reactant can also be injected.

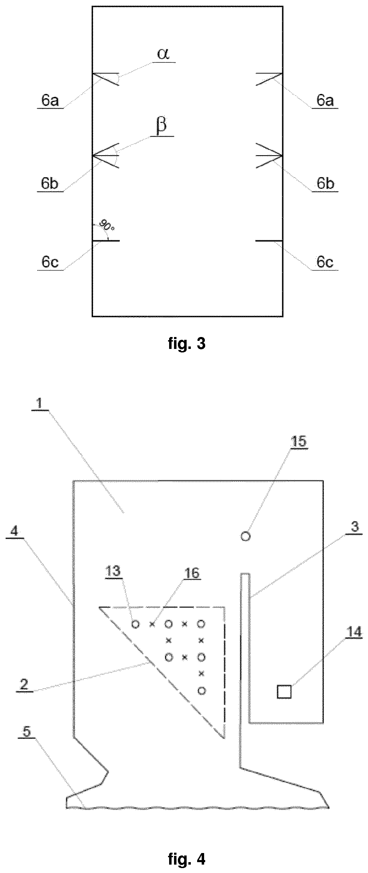

Shown in Fig. 3 is a horizontal section through the combustion chamber of the grate boiler 1, represents with symbolic arrows, an exemplary arrangement of individual types of nozzles in the furnace chamber of the grate boiler 1 and the injection directions of the reactant.

It has been schematically pointed out that the injection nozzles located near the front wall 4 or the rear wall 3 of the combustion chamber of the grate boiler 1 are two-hole unsymmetrical 6a, with one hole directed along the rear 3 / front wall 4 of the grate boiler 1 and the second hole facing the center of the boiler's combustion chamber.

The angle α between the injection direction from both of these holes is an acute angle, preferably between 20° and 70°.

However, injection nozzles that are not near the front wall 4 or back wall 3 of the grate boiler 1 may be two-hole unsymmetrical 6a, three-hole symmetrical 6b or one-hole nozzles with a centrally located hole 6c. In Fig. 3, for example, three-hole nozzles, symmetrical 6b, are located, with one hole directed perpendicular to the side wall 7 of the grate boiler 1 and the other two holes directed at an acute angle.

The angle between the injection directions from these three holes is: for a central hole 90° in relation to the side wall 7 of the grate boiler 1, whereas for side openings the angle β is preferably from 20° to 70°relative to the side wall 7 of the grate boiler 1.

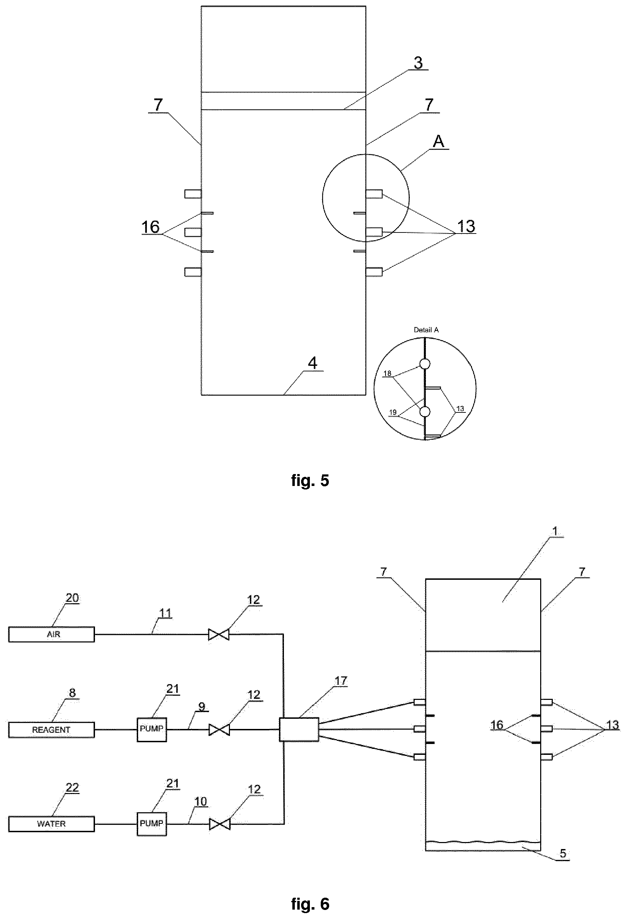

The installation of selective, non-catalytic reduction of NOx in the grate boiler in the example shown in Fig. 4, Fig. 5 and Fig. 6 has lances with injection nozzles 13 located in the side walls 7 in fins 19 of the combustion chamber of grate boiler 1 between the screen tubes 18 forming the combustion chamber walls of grate boiler 1, which are metal elements connecting these pipes.

This arrangement of the lances with injection nozzles 13 makes it possible to leave the existing screen tube arrangement 18 in the grate boiler 1 unchanged, and especially without bending them to make room for lances with injection nozzles 13. Any interference in screen tube system 18 degrades the operation of the grate boiler 1, whereby placing these lances in the fins 19 is a beneficial solution.

The lances with injection nozzles 13 are fixed in the openings so that a major part of the lance extends from the walls of the grate boiler 1 on its outside, whereby two-hole unsymmetrical 6a, three-hole symmetrical 6b, single-hole nozzles with centrally located hole 6c are placed inside the boiler's combustion chamber in close proximity to the side walls 1a and 1b, preferably without extending into the boiler's combustion chamber.

This solution ensures minimal interference in the combustion chamber flow system. Due to the minimal presence of lances with injection nozzles 13 inside the grate boiler 1, the influence of high temperature and other harmful environmental features of the boiler's combustion chamber on the lances is minimized, which increases the safety and stability of their operation.

In addition, the lances with injection nozzles 13 do not have to be additionally cooled, since only a small part of their construction intakes a lot of heat and the heat removal effect of the urea or ammonia solution flowing through the lance is sufficient.

To the lances with injection nozzles 13 supply lanes for water for dilution of the urea or ammonia solution 10 are connected, the lanes supplying aqueous solution of the reactant, i.e. urea or ammonia 9 are connected to the lances with injection nozzles 13, and air supply lines are connected for air to inject the reactant solution 11.

These lines are connected to the tanks of suitable substances, e.g. a tank of aqueous reactant solution 8 and a water tank 22, or with devices such as pumps 21 or a compressor 20, which should provide a sufficiently high pressure. Such solutions are known in the current state of art.

Lines 9, 10 and 11 are provided with electrovalves 12, which control the injection of an aqueous solution of reactant and air into the combustion chamber of grate boiler 1. Electrovalves 12 regulate the proportions of water and aqueous urea or ammonia solution controlling the final concentration of the injected reactant solution.

The electrovalves 12 also regulate the amount of air relative to the aqueous solution of urea or ammonia, controlling the injection range and the shape of the stream flowing out of the injection nozzles 6a, 6b and 6c.

Lances with injection nozzles 13 installed on both side walls 7 of the grate boiler 1, are placed in horizontal rows. As a result of the tests, it has been found that the preferred number of rows of lances with injection nozzles 13 is from 1 to 10 rows, in particular from 2 to 7 rows. These numbers are related to the dimensions of the boiler as well as the possible injection parameters of the reactant.

With a large amount of highly atomized reactant and small sizes of the combustion chamber, it is preferable to use a smaller number of lances with injection nozzles 13 and to distribute them in a smaller number of rows. This ensures the minimum possible interference in the structure of the walls of the furnace chamber of the grate boiler 1.

With larger grate boilers, it may be necessary to increase the number of lances with injection nozzles 13 so that the reactant supplied is in quantities and an area that guarantee effective reduction of nitrogen oxides. In most of the tested cases, it has proved advantageous to arrange the lances with injection nozzles 13 with a number of rows equal to 3, 4 or 5.

Due to the possible interference in the structure of the grate boiler 1, it has been proven advantageous that the number of lances with injection nozzles 13 is not too large. It was found that the number of lances in each of the horizontal rows is important in this issue and that the largest size grate boilers should use less than 15 lances in each row. Equally satisfactory efficiency of NOx reduction was obtained at the number of lances smaller than 12, and even at the number of lances smaller than 9. In the case of the most frequently used grate boilers, which are relatively small in size, the number of lances in each row smaller than 5 turned out to be optimal.

In addition, due to the triangular shape of the region 2 of the distribution of the lances with the injection nozzles 13, has been proven in the tests that the number of these lances in each row is optimal to be different. At the same time, the least number of lances with injection nozzles 13 should be placed in the lowest row, closest to the grate zone 5 and this is a number of 1 to 3 lances. It has been found advantageous that in each of the rows above the lowest row, the number of lances with injection nozzles 13 increases, in particular from 1 to 2 lances in each successive row.

The operation of the selective, non-catalytic reduction of nitrogen oxides is coordinated and managed by the electronic control system 17, which uses various data obtained from the temporary characteristic measurements of the grate boiler 1 and is connected to the temperature sensors 15 measuring the exhaust gas temperature and sensors for the concentration of nitrogen oxides 14 and also with optical flame detectors 16, located at each lance with injection nozzles 13.

The method and installation for selective, non-catalytic reduction of nitrogen oxides in the grate boilers according to the invention are used in particular in the district heating water grate boilers with power output up to 50 MW.

### Reference numbers in the drawing

- 1 -: grate boiler
- 1a -: right side of the grate boiler
- 1b -: left side of the grate boiler
- 2 -: area / zone of distribution of lances with injection nozzles
- 3 -: rear wall of the grate boiler
- 4 -: front wall of the grate boiler
- 5 -: grate (bottom of the grate boiler)
- 6a -: injection nozzle, two-hole unsymmetrical
- 6b -: injection nozzle, three-hole
- 6c -: single-hole injection nozzle with a hole placed centrally
- 7 -: side walls of the boiler
- 8 -: aqueous reactant solution tank
- 9 -: lines supplying the aqueous reactant solution to the lances
- 10 -: water supply lines for diluting the reactant solution
- 11 -: supply lines for air to inject the reactant solution
- 12 -: electrovalves
- 13 -: lances with injection nozzles
- 14 -: concentration of nitrogen oxides sensors
- 15 -: temperature sensors
- 16 -: optical flame detector
- 17 -: electronic control system
- 18 -: wall tubes
- 19 -: fins
- 20 -: compressor
- 21 -: pump
- 22 -: water tank
- α -: the injection angle of the reactant from the asymmetric two-hole nozzle
- β -: the injection angle of the reactant from the symmetrical three-hole nozzle

## Claims

1. Installation of selective, non-catalytic reduction of nitrogen oxides in grate boilers, equipped with
a tank of aqueous reactant solution containing urea or ammonia,
lines suppling reactant into the lances,
water lines providing water for diluting the reactant solution,
air lines for providing air for injecting the reactant solution,
electrovalves,
lances with nozzles,
nitrogen oxide concentration sensors,
temperature sensors,
and an optical flame detector, **characterized in that**
built-in in both side walls (7) of the furnace chamber of the grate boiler (1) lances with injection nozzles (13)
are located on each of these walls in the area of a right-angled triangle (2), one leg of said triangle is vertical and near the back (3) wall of the furnace chamber and the other leg is horizontal and connects to the upper end of the first leg and runs towards the front wall (4) of the furnace chamber and
are placed in the holes in the fins (19) between the screen tubes (18), so that the major part of the lance with injection nozzles (13) extends from the wall of the grate boiler (1) from its outside and only unsymmetrical two-hole injection nozzles (6a), three-hole symmetric (6b), single-hole injection with hole centrally located (6c) are introduced into the furnace chamber of this boiler,
wherein lances with injection nozzles (13) are placed on the walls of the furnace chamber of the grate boiler (1) in horizontal rows, which, depending on boiler dimensions and power, as well as injection parameters, ranges from 1 to 10 rows, and each of these rows has less than 15 lances with injection nozzles,
while the number of lances with injection nozzles (13) in the lowest row is from 1 to 3 and in each row from the lowest to the highest row, the number of lances with injection nozzles (13) increases by 1-2 lances,
wherein in the lowest row lances with injection nozzles (13) have asymmetrical two-hole injection nozzles (6a) or single-hole nozzles with center hole (6c) and lances with injection nozzles (13) in the highest row there have two-hole unsymmetrical injection nozzles (6a) and / or symmetrical three-hole nozzles (6b), while lances with injection nozzles (13) between the highest and the lowest row have two-hole unsymmetrical injection nozzles (6a) and / or three-hole symmetric injection nozzles ( 6b) and / or single-hole nozzles with a centrally located hole (6c).

2. The method of selective, non-catalytic reduction of nitrogen oxides in grate boilers, using a pressure injection of an aqueous solution of a reactant containing urea or ammonia to the boiler's combustion chamber, conducted in the installation according to claim 1,
wherein the injection of the reactant solution is determined on the basis of boiler power, exhaust temperature, nitrogen oxide concentration and the signal from the optical flame detector
while the injection site results from the temperature distribution in the boiler furnace chamber, **characterized in that**
injection of the aqueous reactant solution of urea or ammonia with concentration of 5% to 40% into the furnace chamber of the grate boiler (1) using air in the proportion of 0,1 kg / kg to 2 kg / kg relative to the reactant solution is made from both of its side walls (7) from lances with nozzles (13) above the detected flame area,
while the injection of the reactant solution near the front wall (4) and the rear wall (3) of the grate boiler combustion chamber (1) is made of unsymmetrical two-hole nozzles (6a) with one hole centrally faced along the rear wall (3) / front wall (4) of the grate boiler (1) and with a second hole directed towards the center of the combustion chamber with an acute angle (α) between the injection directions from both of these holes preferably between 20° and 70° or one-hole nozzles with a centrally located hole (6c),
while injection of the reactant solution from injection nozzles not in the vicinity of the front wall (4) or the back wall (3) of the grate boiler (1) is from unsymmetrical two-hole nozzles (6a), symmetrical three-hole nozzles (6b) with one hole centrally oriented perpendicular to the side wall (7) of grate boiler (1) and two side holes directed towards the center of the combustion chamber with an acute angle (β) between the injection directions from both of these holes, preferably between 20° and 70° relative to the side wall (7) of the grate boiler (1) or is made by single-hole nozzles with a centrally located hole (6c).

## Patentansprüche

1. Installation einer selektiven, nicht-katalytischen Reduktion von Stickoxiden in Rostkesseln, ausgestattet mit
einem Tank mit wässriger Reaktantenlösung, die Harnstoff oder Ammoniak enthält,
Leitungen, die den Reaktanten in die Lanzen einspeisen, Wasserleitungen, die Wasser zur Verdünnung der Reaktantenlösung liefern, Luftleitungen für die Bereitstellung von Luft zum Einspritzen der Reaktantenlösung,
Elektroventilen,
Lanzen mit Düsen,
Sensoren für die Stickoxidkonzentration,
Temperatursensoren,
und einem optischen Flammendetektor, **dadurch gekennzeichnet, dass**
in den beiden Seitenwänden (7) des Feuerraumes des Rostkessels **(1)**jeweils Lanzen mit Einspritzdüsen (13)
im Bereich eines rechtwinkligen Dreiecks (2) eingebaut sind, ein Schenkel dieses Dreiecks senkrecht und in der Nähe der hinteren (3) Wand des Feuerraums verläuft und der andere Schenkel waagerecht ist und sich an das obere Ende des ersten Schenkels anschließt und in Richtung der vorderen Wand (4) des Feuerraums verläuft und
in den Löchern der Rippen (19) zwischen den Siebrohren (18) angeordnet ist, so dass der größte Teil der Lanze mit Einspritzdüsen (13) von der Wand des Rostkessels (1) nach außen ragt und nur unsymmetrische Zweiloch-Einspritzdüsen (6a), Dreiloch-Symmetrisch (6b), Einloch-Einspritzung mit mittig angeordnetem Loch (6c) in den Feuerraum dieses Kessels eingebracht werden,
wobei Lanzen mit Einspritzdüsen (13) an den Wänden des Feuerraums des Rostkessels (1) in horizontalen Reihen angeordnet sind, die je nach Kesselabmessungen und Leistung, sowie den Einspritzparametern von 1 bis 10 Reihen reicht und jede dieser Reihen weniger als 15 Lanzen mit Einspritzdüsen aufweist,
wobei die Anzahl der Lanzen mit Einspritzdüsen (13) in der untersten Reihe 1 bis 3 beträgt und in jeder Reihe von der untersten bis zur obersten Reihe die Anzahl der Lanzen mit Einspritzdüsen (13) um 1-2 Lanzen zunimmt,
wobei in der untersten Reihe Lanzen mit Einspritzdüsen (13) asymmetrische Zweiloch-Einspritzdüsen (6a) oder Einloch-Einspritzdüsen mit Mittelloch (6c) und Lanzen mit Einspritzdüsen (13) in der obersten Reihe dort unsymmetrische Zweiloch-Einspritzdüsen (6a) und / oder symmetrische Dreiloch-Einspritzdüsen (6b) aufweisen, während Lanzen mit Einspritzdüsen (13) zwischen der obersten und der untersten Reihe unsymmetrische Zweiloch-Einspritzdüsen (6a) und / oder symmetrische Dreiloch-Einspritzdüsen (6b) und / oder Einloch-Einspritzdüsen mit einem mittig angeordneten Loch (6c) aufweisen.

2. Verfahren zur selektiven, nicht-katalytischen Reduktion von Stickoxiden in Rostkesseln unter Verwendung einer Druckinjektion einer wässrigen Lösung eines harnstoff- oder ammoniakhaltigen Reaktanten in die Brennkammer des Kessels, durchgeführt in der Anlage nach Anspruch 1,
wobei die Einspritzung der Reaktantenlösung auf der Grundlage der Kesselleistung, der Abgastemperatur, der Stickoxidkonzentration und des Signals des optischen Flammendetektors bestimmt wird
wobei sich die Einspritzstelle aus der Temperaturverteilung im Kessel ergibt, **dadurch gekennzeichnet, dass**
die Einspritzung der wässrigen Reaktantenlösung von Harnstoff oder Ammoniak mit einer Konzentration von 5% bis 40% in den Feuerraum des Rostkessels **(1)** unter Verwendung von Luft im Verhältnis von 0,1 kg/kg bis 2 kg/kg bezogen auf die Reaktantenlösung von beiden seiner Seitenwände (7) aus Lanzen mit Düsen (13) oberhalb des detektierten Flammenbereichs erfolgt,
während die Einspritzung der Reaktantenlösung in der Nähe der vorderen Wand (4) und der hinteren Wand (3) der Rostkesselbrennkammer **(1)** aus unsymmetrischen Zweilochdüsen (6a) erfolgt, wobei ein Loch mittig entlang der hinteren Wand (3) / vorderen Wand (4) des Rostkessels **(1)** und ein zweites Loch in Richtung der Mitte der Brennkammer mit einem spitzen Winkel (α) zwischen den Einspritzrichtungen aus diesen beiden Löchern vorzugsweise zwischen 20° und 70° gerichtet ist, oder aus Einlochdüsen mit einem mittig angeordneten Loch (6c),
während die Einspritzung der Reaktantenlösung aus Einspritzdüsen, die sich nicht in der Nähe der Vorderwand (4) oder der Rückwand (3) des Rostkessels **(1)** befinden, aus unsymmetrischen Zweilochdüsen (6a) erfolgt, symmetrischen Dreilochdüsen (6b) mit einer mittig senkrecht zur Seitenwand (7) des Rostkessels **(1)** ausgerichteten Bohrung und zwei seitlich zur Brennraummitte gerichteten Bohrungen mit einem spitzen Winkel (β) zwischen den Einspritzrichtungen aus diesen beiden Bohrungen, vorzugsweise zwischen 20° und 70° relativ zur Seitenwand (7) des Rostkessels **(1)** oder durch Einlochdüsen mit einer mittig angeordneten Bohrung (6c) erfolgt.

## Revendications

1. Installation de réduction sélective non catalytique des oxydes d'azote dans des chaudières à grille, équipée de
un réservoir pour solution aqueuse de réactif contenant de l'urée ou de l'ammoniac,
des conduites fournissant le réactif dans des lances,
des conduites d'eau fournissant de l'eau pour diluer la solution de réactif,
des conduites d'air pour fournir l'air pour injecter la solution de réactif,
des électrovannes,
des lances avec des buses,
des détecteurs de concentration d'oxyde d'azote,
des détecteurs de température,
et un détecteur de flamme optique, **caractérisée en ce que**
intégrées dans les deux parois latérales (7) de la chambre du four de la chaudière à grille **(1)**, des lances avec des buses d'injection (13)
sont situées sur chacune de ces parois dans la zone d'un triangle rectangle (2), une branche dudit triangle est verticale et proche de la paroi arrière (3) de la chambre du four et l'autre branche est horizontale et se raccorde à l'extrémité supérieure de la première branche et se dirige vers la paroi avant (4) de la chambre du four et
sont placées dans les trous des ailettes (19) entre les tubes d'écran (18), de sorte que la majeure partie de la lance avec les buses d'injection (13) s'étende de la paroi de la chaudière à grille (1) depuis son extérieur et que seules des buses d'injection non symétriques à deux trous (6a), symétriques à trois trous (6b), à un seul trou avec un trou situé centralement (6c) soient introduites dans la chambre du four de cette chaudière,
dans laquelle les lances avec des buses d'injection (13) sont placées sur les parois de la chambre du four de la chaudière à grille (1) en rangées horizontales, qui, en fonction des dimensions et de la puissance de la chaudière, ainsi que des paramètres d'injection, vont de 1 à 10 rangées, et chacune de ces rangées a moins de 15 lances avec des buses d'injection,
tandis que le nombre de lances avec des buses d'injection (13) dans la rangée la plus basse est de 1 à 3 et dans chaque rangée de la rangée la plus basse à la plus haute, le nombre de lances avec des buses d'injection (13) augmente de 1 à 2 lances, dans laquelle, dans la rangée la plus basse, les lances avec des buses d'injection (13) ont des buses d'injection asymétriques à deux trous (6a) ou des buses à un seul trou avec un trou central (6c) et les lances avec des buses d'injection (13) dans la rangée la plus haute ont des buses d'injection asymétriques à deux trous (6a) et/ou des buses symétriques à trois trous (6b), tandis que les lances avec des buses d'injection (13) entre la rangée la plus haute et la rangée la plus basse ont des buses d'injection non symétriques à deux trous (6a) et/ou des buses d'injection symétriques à trois trous (6b) et/ou des buses à un seul trou avec un trou situé centralement (6c).

2. La méthode de réduction sélective non catalytique des oxydes d'azote dans les chaudières à grille, utilisant une injection sous pression d'une solution aqueuse d'un réactif contenant de l'urée ou de l'ammoniac dans la chambre de combustion de la chaudière, réalisée dans l'installation selon la revendication 1,
dans laquelle l'injection de la solution de réactif est déterminée sur la base de la puissance de la chaudière, de la température d'échappement, de la concentration d'oxyde d'azote et du signal du détecteur de flamme optique, tandis que le site d'injection résulte de la distribution de température dans la chambre du four de la chaudière, **caractérisée en ce que**
l'injection de la solution aqueuse de réactif contenant de l'urée ou de l'ammoniac avec une concentration de 5% à 40% dans la chambre de combustion de la chaudière à grille **(1)** en utilisant de l'air dans la proportion de 0,1 kg/kg à 2 kg/kg par rapport à la solution de réactif est faite à partir de ses deux parois latérales (7) à partir de lances avec des buses (13) au-dessus de la zone de flamme détectée,
tandis que l'injection de la solution de réactif près de la paroi avant (4) et de la paroi arrière (3) de la chambre de combustion de la chaudière à grille **(1)** est faite par des buses asymétriques à deux trous (6a) avec un trou orienté centralement le long de la paroi arrière (3) / paroi avant (4) de la chaudière à grille **(1)** et avec un second trou dirigé vers le centre de la chambre de combustion avec un angle aigu (α) entre les directions d'injection de ces deux trous, de préférence entre 20° et 70°, ou des buses à un trou avec un trou situé centralement (6c),
tandis que l'injection de la solution réactive à partir de buses d'injection qui ne sont pas à proximité de la paroi avant (4) ou de la paroi arrière (3) de la chaudière à grille **(1)** se fait à partir de buses à deux trous non symétriques (6a), des buses à trois trous symétriques (6b) avec un trou central orienté perpendiculairement à la paroi latérale (7) de la chaudière à grille **(1)**et deux trous latéraux dirigés vers le centre de la chambre de combustion avec un angle aigu (β) entre les directions d'injection de ces deux trous, de préférence entre 20° et 70° par rapport à la paroi latérale (7) de la chaudière à grille **(1)** ou par des buses à un seul trou avec un trou situé centralement (6c).
